Europäisches Patentamt

**(19)** European Patent Office

Office européen des brevets

**(11)** Publication number : **0 472 384 A2**

## **(12)** EUROPEAN PATENT APPLICATION

**(21)** Application number : **91307603.0**

**(22)** Date of filing : **16.08.91**

**(51)** Int. Cl.$^5$ : **B29B 11/00,** G02B 6/00

**(30)** Priority : **16.08.90 JP 216400/90**

**(43)** Date of publication of application :
**26.02.92 Bulletin 92/09**

**(84)** Designated Contracting States :
**DE ES FR GB IT**

**(71)** Applicant : **Koike, Yasuhiro**
**303 Mondo-Ohokayama-Park, 1-31-30**
**Ohokayama**
**Meguro-ku (JP)**

**(72)** Inventor : **Koike, Yasuhiro**
**303 Mondo-Ohokayama-Park 1-31-30**
**Ohokayama**
**Meguro-Ku, Tokyo (JP)**
Inventor : **Nihei, Eisuke**
**105 Green Capital, 788 Shimoodanaka**
**Nakahara-Ku, Kawasaki (JP)**

**(74)** Representative : **Holmes, Michael John**
**Frank B. Dehn & Co. Imperial House 15-19**
**Kingsway**
**London WC2B 6UZ (GB)**

**(54) Plastic optical fiber and its manufacturing method.**

**(57)** Plastics optical fibres wherein the relation-
ship between the refractive indices of the core
and clad materials and the diameter of the core
are such that the fibres exhibit single mode or
other specific mode number characteristics.

EP 0 472 384 A2

Jouve, 18, rue Saint-Denis, 75001 PARIS

[FIELD OF THE INVENTION]

This invention relates to the plastic optical fiber having the single mode or specific mode number for optical communication and its manufacturing method.

[PRIOR ART]

In conjunction with a rapid progress of the optical communication technology, further upgrading of the function of various optical fibers such as glass fiber and plastic fiber has been required.

Among optical fibers as a waveguide, the single mode optical fiber has a very broad bandwidth(transmission band). By utilizing these characteristics, a single mode optical glass fiber has been used for the trunk line of long distance large capacity transmission line.

However, the optical glass fiber is not so flexible and not easy handling from the point of the material. On the other hand, the plastic fiber is very flexible and easy for handling, therefore several types of it have been placed on the market those of which the core is made from polystyrene and the clad is made from methylmethacrylate or those using poly (methyl methacrylate) for the core and fluororesin for the clad. They are widely used for a light guide, various sensors or short distance transmission communication medium. These plastic fiber are multi-mode SI type plastic optical fibers and their theoretical bandwidth is about 2 MHz·km. Therefore, there is a problem that the band is too narrow to use form high grade information communication. Moreover, in the optical fiber consisting of a core and clad, the incident light is transmitted by the total reflection on the surface of the core and clad. However, since a large transmission loss is caused in the reflection above, there has been a problem that high transparent fibers cannot be manufactured.

To widen such a narrow transmission band, the multi-mode refractive index distribution type (GI type) plastic optical fiber having a characteristic refractive index distribution that the refractive index decreases gradually from the center of the transmission medium has been researched. In this optical fiber, the incident light runs in the optical fiber while drawing a sine curve. Therefore, the optical fiber with no reflection and more transparency is probably realized. As a multi-mode refractive index distribution type (GI type) plastic optical fiber, that having 260 MHz·km transmission band was developed. For the single mode fiber, its transmission band theoretically becomes very large, therefore this fiber is further expected as a future high grade information communication transmission medium. Also, the wave surface phase transmission which is difficult for the GI type optical fiber is possible for the fiber above. The application to the high accuracy optical fiber may be expected.

Therefore, it is expected that the single mode fiber will influence greatly communication and opto-electronic technologies. So far, however, the plastic optical fiber having the single mode or specific mode number of which the function is far higher than that of the GI type optical fiber described above has not been successful because of difficulties of manufacturing.

[SUMMARY OF THE INVENTION]

This invention has been conducted due to circumstances described above. The purpose of it is to propose the plastic optical fiber having the single mode or specific mode number which has not been realized and its manufacturing method.

This invention provides the plastic optical fiber characterized by controlling the core diameter and a difference in refractive index between the core and clad and having single mode or specific mode number to solve the problems above. Further, in detail as a preferable mode, this invention provides the plastic optical fiber characterized by consisting of an elongated optical fiber base material having the low refractive index peripheral part and the high refractive index center part. Also this invention provides:

(A) The manufacturing method of the plastic optical fiber having single mode or specific mode number and controlling the core diameter and a difference in refractive index between the core and clad for the elongated optical fiber base material manufactured by; filling in a cylindrical vessel the monomer mixture solution containing at least one type of monomer or its polymer and low molecular weight compounds of which the refractive index is higher than that of polymer obtained from at least one type of monomer; heating or irradiating energy rays to the vessel periphery; depositing high molecular weight polymers preferentially on the vessel periphery and raising the rate of existence of high refractive index low molecular weight compounds in the vicinity of the center axis.

(B) Manufacturing method of the plastic optical fiber having the single mode or specific mode number and controlling the core diameter and a difference in refractive index between the core and clad for the elongated optical fiber manufactured by; filling in a cylindrical vessel at least more than two types of monomers which provide polymers having different refractive index or their sols in the course of polymerization; heating or irradiating energy rays to the vessel periphery, depositing preferentially high molecular polymers on the vessel periphery and raising the rate of existence of high refractive index polymers in the vicinity of the center axis.

(C) Manufacturing method of the plastic optical fiber having the single mode or specific mode number and controlling the core diameter and a difference in refractive index between the core and clad for the elongated optical fiber base material manufactured by; inserting in a cylindrical vessel the plastic optical fiber obtained by the method (A) or (B) above , or inserting in the vessel the fiber and injecting monomer into gaps for polymerization.

(D) Manufacturing of the plastic optical fiber having single mode or specific mode number and controlling the core diameter and a difference in refractive index between the core and clad for the elongated optical fiber base material manufactured by; inserting GI or SI type optical fiber consisting of liner polymers into a cylindrical vessel and injecting monomer into gaps.

(E) Manufactring method of the plastic optical fiber having the single mode or specific mode number characterized by controlling the core diameter and a difference in refractive index between the core and clad for the elongated optical fiber base material manufactured by inserting the plymer rod or fiber into a cylindrical vessel.

Monomers may be injected into the gaps between inserted polymer rod or fiber and cylindrical vessel.

(F) Manufacturing method of the plastic optical fiber having the singel mode or specific mode number characterzed by controlling the core diameter and a difference in refractive index between the core and clad for the elongated optical fiber base material manufactured; by filling, in a cylindrical vessel, the monomer containing at least one type of monomer, its sol in the course of polymerization or its polymer mixture, which gives polymer having a higher refractive index than that of the cylindrical vessel; by heating or irradiating energy rays from the periphery of the vessel for polymerization.

(G) Manufacturing method of the plastic optical fiber having the single mode or specific mode number characterized by controlliing the core diameter and a difference in refractive index between the core and clad for the elongated base material of the optical fiber manufactured; by filling, in a cylindreical vessel, the monomer containing at least one type of monomer or its polymer mixture and the hgh molecular weight polymer or oligomer of which the refractive index is higher than that of the polymer obtained from at least one type of monomer; by heating the vessel from the periphery or irradiating energy rays; by raising the rate of existence of the high molecular weight polymer or oligomer having higher refractive index in the vicinity of the center axis.

Fartheremore, this invention porvides the plastic optical fiber, rod, sheet, or bundle, in which there are at least two cores having the single mode or specific mode number by controlling the core diameter and a difference in refractive index between the core and the surrounding medium coresponding to the clasd, and the manufacturing method threof, which is caracterized by controlling each core diameter and a difference in refractive index between the core and surrounding medium(clad) for the elongated base materials manufactured by the porcess above-mentioned, in which there are at least two holes giving core region in the vessel by hot-elongation.

[BRIEF DESCRIPTION OF FIGURES]

Fig. 1 shows a section of a manufacturing apparatus for optical fiber of this invention.

Fig. 2 shows an elevation of the elongating equipment and Fig. 3 shows an example of inserting the material into a polymerizing tube.

Figs. 4 and 5 show the refractive index distribution of the single mode optical fiber of this invention as an example.

Fig. 6 shows the refractive index distribution of the single mode optical fiber of this invention as another example.

Fig.7 shows the photograph image and intensity display of out-put at the end-surface of the single mode polymer optical fiber prepared in example.

The numbers described in Figures mean followings;
1. Polymerizing vessel
2. Polymerizing vessel rotating equipment
3. Energy ray irradiating equipment
4. Irradiating equipment elevator
5. Base material
6. Base material supply equipment
7. Heating furnace
8. Fiber winder
9. Fiber
10. Polymerizing tube

[DETAILED DESCRIPTION OF THE INVENTION]

As above-mentioned, this invention provides the single mode or specific mode plastic optical fiber having characteristics of low loss and wide transmission band and its manufacturing method.

For the manufacture of the single mode optical fibers, several methods have been proposed for a quartz fiber, however, no method has been proposed for plastics. Therefore, it can be said that this invention is unique.

Characteristics of this invention are described in detail below:

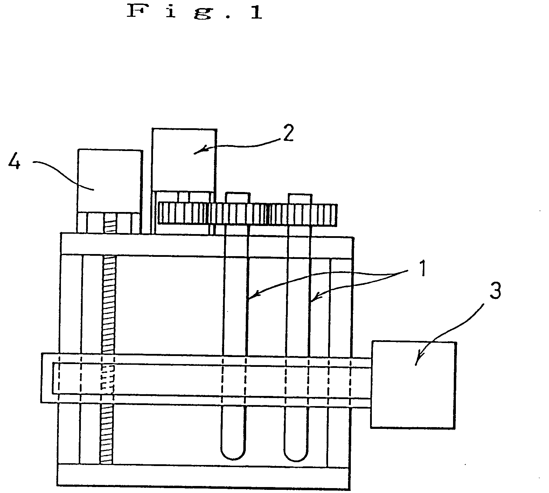

Figs. 1, 2 and 3 show examples of manufacturing method of the plastic optical fiber of this invention. Fig. 1 shows the manufacturing apparatus for the plastic optical fiber base material by heating or energy irradiation equipped with polymerizing vessel (1), polymerizing vessel rotating equipment (2), energy irradiating equipment (3) and irradiating equipment elevator(4).

For example, in this polymerization vessel, the specified rate mixture of the monomer giving a low refractive index polymer and the low molecular weight compound or monomer which gives high refractive index added with the polymerization initiator and chain transfer agent is injected. While rotating polymerizing vessel (1) at a suitable uniform speed by rotator (2), energy rays (for example, ultraviolet or infrared rays) are irradiated to the perphery. Heating means may be acceptable. These energy rays are irradiated by elevating the equipment gradually by elevator (4). In polymerizing vessel (1), the polymerization initiator works by irradiated energy rays and polymers start to form on the inner wall of polymerizing vessel (1). In conjunction with progress of polymerization, polymers are formed from the inner wall of polymerizing vessel towards the center axis. In this case, however, the quantity of low molecular weight material taken in by polymers which provides high refractive index or that of the monomer which provides high refractive index is low. In conjunction with a progress of polymerization, low molecular weight materials providing high refractive index or monomers providing high refractive index gradually increase the concentration in the vicinity of the center axis. At the final stage, they are taken in by polymers at a high concentration state or copolymerized in the vicinity of the center axis. Thus, single mode or specific mode plastic optical fiber base material (5) having the fiber structure of which the refractive index is low at the peripheral part is formed.

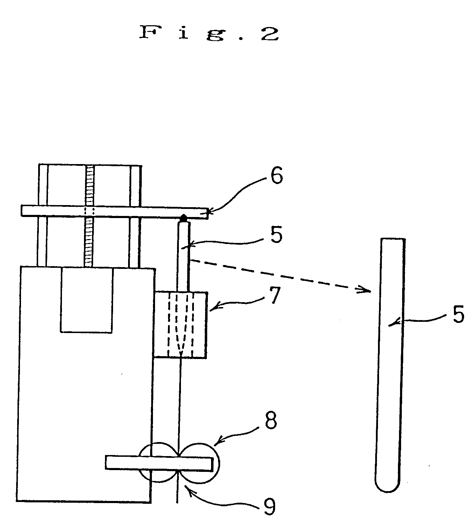

Fig. 2 shows a process for forming a fiber by elongating (wire drawing) the plastic optical fiber base material (5) which has been manufactured as shown above. Optical fiber base material (5) is delivered to base material supply equipment (6) and inserted into heating furnace (7) at constant speed $V_1$. The base material softened by the heating furnace is spun at constant speed $V_2$ by fiber winder (8) installed under heating furnance (7). At this time, by changing arbitrarily the ratio between base material supply speed and winding speed ($V_1/V_2$), it is possible to manufacture fiber (a) having arbitrary and thinner diameters than that of the base material.

It is also possible to form the plastic optical fiber having the single mode or specific mode by hot-elongating the plastic optical fiber base material, set up on the apparantus shown in Fig. 2, manufactured by; inserting fiber (9) manufactured into polymerizing tube (10) in the vicinity of the center axis; filling gaps with the mixed solution of monomer, polymerization initiator and chain transfer agent and polymerizing in the polymerizing equipment by irradiating heat or energy (Fig. 1).

When assuming that the core diameter is 2A, supply speed is $V_1$ and elongation speed is $V_2$ for the single mode plastic optical fiber base material before hot-elongation, for example base material (5) of Fig. 2, core diameter 2a of the manufactured single mode or specific mode plastic optical fiber is given by the following formula:

$$2a = 2A \cdot \frac{\sqrt{V_1}}{\sqrt{V_2}} \quad (I)$$

The single mode condition is given by the following formula.

$$V = \frac{2\pi a}{\lambda} \sqrt{n_1{}^2 - n_2{}^2} < 2.405 \quad (II)$$

where:
V = rated cut off frequency (V parameter)
$n_1$ = refractive index of core part
$n_2$ = refractive index of clad part
$\lambda$ = light source wave lenght

In practice, since $n_1$ and $n_2$ are approximately 1.495 respectively, (II) can be changed as follows:

$$V = \frac{2\pi a}{\lambda} \sqrt{2 n_1 \Delta n} < 2.405 \quad (III)$$

Where: $\Delta n = n_1 - n_2$

When manufacturing the single mode or specific mode plastic optical fiber of this invention which can be indicated as shown above, an arbitral shape of vessel for manufacturing base material (5) may be selected, for example, colume, square or preferably cylindrical.

The polymer giving low refractive index is deposited on the vessel periphery preferentially and the refractive index is increased in the vicinity of the center axis.

In this case, for a combination of monomer and polymer, the following examples can be given;

. Methyl methacrylate (MMA) and benzyl methacrylate (BzMA)
. Methyl methacrylate (MMA) and phenyl methacrylate (PhMA)
. Methyl methacrylate (MMA) and 1.1.2-trifluoro Methyl methacrylate (3F MA)
. Styrene (St) and methylmethacrylate (MMA)

Of course, the above is not limited and the following monomers may be suitably selected.
For example:
. 4- methylcyclohexyl methacrylate
. Cyclohexyl methacrylate
. Furfuryl methacrylate
. 1-phenylcyclohexyl methacrylate
. 1.2-diphenylethyl methacrylate
. O-chlorobenzyl methacrylate
. Diphenylmethyl methacrylate
. Pentachlorophenyl methacrylate
. Pentabromophenyl methacrylate

For providing polymers with a refractive index gradient, it may be possible to select by taking into consideration the refractive index, solubility of these monomers, polymers or low molecular compounds and reactivity ratio of monomers.

For monomers injected into gaps of the reacting vessel when forming the base material from elongated fibers or GI or SI type fibers, the same concept as the above may be applied.

For using the polymorizing tube, the monomer forming the polymerizing tube may be considered in the same concept as the above.

The optical fiber of this invention is further described in detail by giving examples as follows:

Example 1

The optical fiber base material (5) was manufactured by using the apparatus and process shown in Fig. 1. The manufacturing condition was as follows:

Feed ratio = MMA/BzMA = 10/1 (wt./wt.)

Chain transfer agent = n-butyl mercaptan = 0.2% for weight

Polymerization initiator = benzoin methyl ether = 0.50% for weight

Ultraviolet ray irradiating time = 20 hr.

Vacuum heat treatment = 80°C, less than 0.2 mmHg, 20 hr

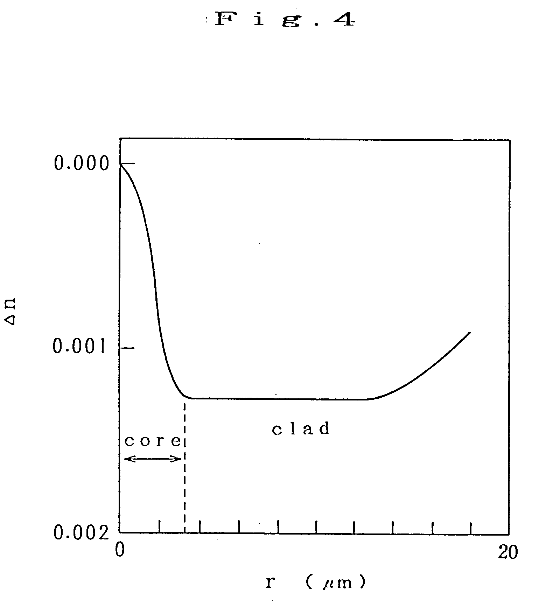

The diameter of base material (5) manufactured was 10 mm and the core diameter was 0.24 mm. By hot-elongating this base material (5) at $V_1$ = 0.25 cm/min and $V_2$ = 625 cm/min at 250°C, the single mode plastic optical fiber having the refractive index distribution shown in Fig 4 and satisfying formula III above was obtained. 0 in Fig. 4 shows the center axis. By the above method, it was possible to manufacture an about 250m long single mode optical fiber from about 10 cm long plastic base material (5).

A difference in refractive index between the core part and clad part ($\Delta$n) can be controlled by changing components of the polymer which forms the clad, components of low molecular weight compounds or those of monomers providing the high refractive index or, furthermore, changing polymerizing conditions.

This difference in refractive index $\Delta$n is desirable to be, in general, within the range of $0.0002 < \Delta n < 0.1$. When $\Delta$ n is smaller than 0.0002, the light is weakly trapped in the core and the fiber capacity decreases, the light is irradiated easily to the outside by an external force such as bending and the bending loss increases. Thus, this case is not desirable. When $\Delta$ n is larger than 0.1, the core diameter must be decreased more and the case becomes disadvantageous when considering connection with another fiber or alignment with the light source.

Thus, this case is also not desirable

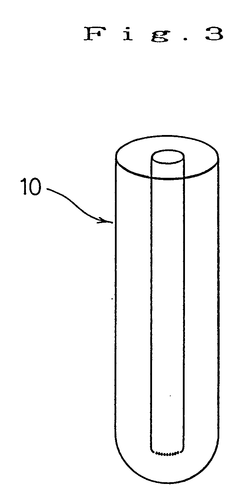

In this working example, only Fig. 1 process was used for manufacturing the plastic base material and the single mode optical fiber was manufactured by hot elongating the base material. However, when the required core is not obtained only by the Fig. 1 process, it is possible to manufacture an arbitral diameter core by the process shown in Fig. 3.

Example 2

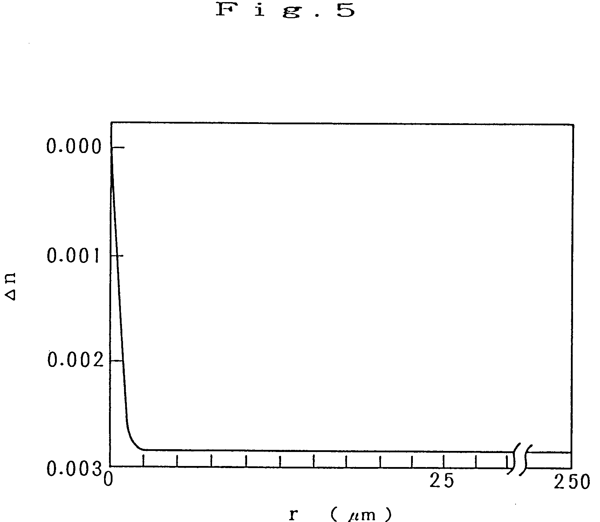

The plastic optical fiber of 0.25 mm outer diameter and 0.005 mm (5 microns) core diameter was manufactured by hot-elongating the plastic optical fiber base material (5) having 10 mm O.D. (clad part), 0.20mm core part diameter, $\Delta$ n between core and clad = 0.003 at $V_1$ = 0.25 cm/min and $V_2$ = 400 cm/min from MMA/BzMA manufactured by the Fig. 3 process. The refractive index distribution was shown in Fig. 5. When light source wave length $\lambda$ = 0.633 microns and calculating the V parameter from formula (III), V is, equal to 2.35. This complies with the single mode condition (V < 2.405). The wave length in which V = 2.405 is 0.619 microns. The plastic optical fiber manufactured by this is single mode at 0.6328 microns wave length. The single mode was confirmed by the far field pattern measurement. Formula (II) is for the case in which the core refractive index distribution is SI type. When the core refractive index is radially approximate 2nd over distribution, $\lambda_c$ = 0.423 microns.

As described above, the single mode optical fiber or specific mode plastic optical fiber can be manufactured in a specific dimension by using the single mode plastic optical fiber or specific mode plastic optical fiber base material or manufactured by putting optical fiber in a polymerizing vessel and filling gaps with monomer for polymerization.

Example 3

The optical fiber base material (5) was manufactured by using the apparatus and process shown in Fig. 1 and fig. 3. First, the preform in which the outer diameter was 10 mm and the core diameter was 0.26mm was obtained from a mixture of MMA and o-dichlorobenzene according to the process of Claim 3. The manufacturing condition of the preform was as follows:

Low refractive index materials; MMA(refactive index of polymer=1.492), High refractive index materials; o-dichlorobenzen(this material is low molecule and is inactive compound. Refactive index of this material=1.551). Feed ratio; MMA/o-dichlorobenzen=10/1, 7/1, 4/1(wt./wt/.).

Chain transfer agent; n-butyl mercaptan=0.20% for weight.

Polymerization initiator; benzoin methylether=0.50% for weight.

Ultraviolet ray irradiation time; 20 hr.

Vacuum heat treatment; 80°C less tha 0.2mmHg, 20hr.

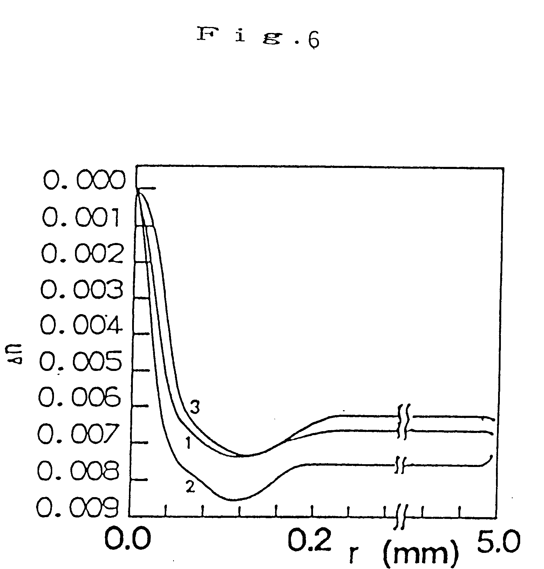

The refractive index distributions of the preforms were shown in Fig. 6.

Figure 6 shows the refractive index distribution of the preform mentioned above. The feed composition of these preforms were as follows:

1; MMA/o-dichlorobenzene=10/1(wt./wt.)

2; MMA/o-dichlorobenzene=7/1(wt./wt.)

3; MMA/o-dichlorobenzene=4/1(wt./wt.)

The preform shown in Fig. 6 was hot-elongated at 250°C under the condition of of V1=1 cm/min and V2=100cm/min to obtain a fiber having 1 mm outer diameter and 0.026 mm core diameter, which was corresponding to a kind of multimode GI plastic optical fiber. The refractive index distribution of the fiber was almost the same as that of the preform shown in Fig. 6.

The fiber was inserted into the cylindrical PMMA polymer vessel shown in Fig. 3, in which outer and inner diameters were 10mm and 1mm respectively. This was hot-elongated at 250°C under the condition of V1=1cm/min and V2=400 cm/min to obtain the single mode plastic optical fiber having 0.5mm outer diameter and 0.0013 mm core diameter. The normalized refractive-index distribution of this single mode plastic optical fiber was almost the same as that shown in Fig. 6.

Regarding this fiber, when the wavelength of light source is 0.78 microns, the V parameter calculated by formula III is 2.64 which is larger than 2.405 of formula III for the single-mode condition of the step-index type. Howeever, as shown in Fig. 6, the above fiber is of granded index type. So the maximum V parameta satisfying the single-mode condition is larger than 2.405. When the refractive index profile is parabolic aginst the distance from the center axis, the maximum V parameter satisfying the single-mode condition is 3.51 and the cut-off wavelength of the single-mode condition becomes 0.587 microns. Therefore, when 0.78 microns wavelength of light source is used, the above fiber should satisfy the single-mo9de condition, which ws also confirmed by the far field pattern method and the measurement of the polarization-phase maintining phenoemena through the fiber.

Example 4

The optical fiber base material was manufactured by the process shown in Fig. 1. Here the vessel was a glass tube with 10mm inner diameter.

The manufacturing condition was as follws:

Monomer feed ratio; MMA/PhMA=20/1(wt./wt.)

Polymerization initiator; benzoin methyl ether=0.2 wt.%

Chain transfer agent; n-butyl mercaptan=0.2 wt.%

Ultraviolet(UV) ray irradiation time; 20 hr.

Vacuum heat treatment; 80°C, less than 0.2 mmHg for 20 hr.

The diameter of the manufactured base material was 10mm and the core diameter was 0.15 mm. This base material has a refractive index distribution which is almost parabolic against the distance from the center axis of core and the $\Delta$ n is 0.002. By hot-elongating this base material at V1=0.36 cm/min and V2=100 cm/min at 250°C, the single mode plastic optical fiber having almost the same normalized index-distribution as that of the base material and having 0.6 mm O.D and 0.009 mm Core diameter was obtained. The cut-off wavelength of this fiber was estimated to be about 621 nm in formula III. The single-mode condition at 633 nm wavelength was confirmed by the far field pattern method and the measurement of the polarization-phase maintaining phenomena throught the fiber by using He-Ne laser.

Example 5

The optical fiber base material was manufactured by the process described in Fig. 1 and Fig. 3. Here the vessel was the PMMA cylindrical tube and the polymerization was carried out only by heating without UV irradiation.

The manufacturing condition was as follows:

Monomer feed ratio: MMA/BzMA=7/1(wt./wt.)

Polymerization initiateor; benzoyl peroxide= 0.15 wt.%

Chain transfer agent; n-butyl mercaptan=0.2 wt.%

Polymerization temperature; 80°C for 20 hr.

Vacuum heat treatment; 100°C, less than 0.2 mmHg for 20 hr.

The diameter of the base material manufactured by the process in Fig. 1 was 10 mm and the core diameter was 6 mm. This base material has a refractive index distribution which is parabolic against the distance from the center axis to the periphery, and the $\Delta$ n is 0.0025. This base material was hot-elongated at V1=1.0 cm/min and V2=100 cm/min at 250°C into the polymer optical fiber having a 1 mm O.D., which corresponds to a graded-index (GI) type polymer optical fiber. this GI optical fiber was inserted into the cylindrical PMMA polymer vessel showin in Fig. 2, in which the outer and inner diameters were 10 mm and 1 mm respectively, and the narrow gap between GI fiber and cylindrical polymer vessel was filled with MMA. This was polymerized to obtain the base material(5).

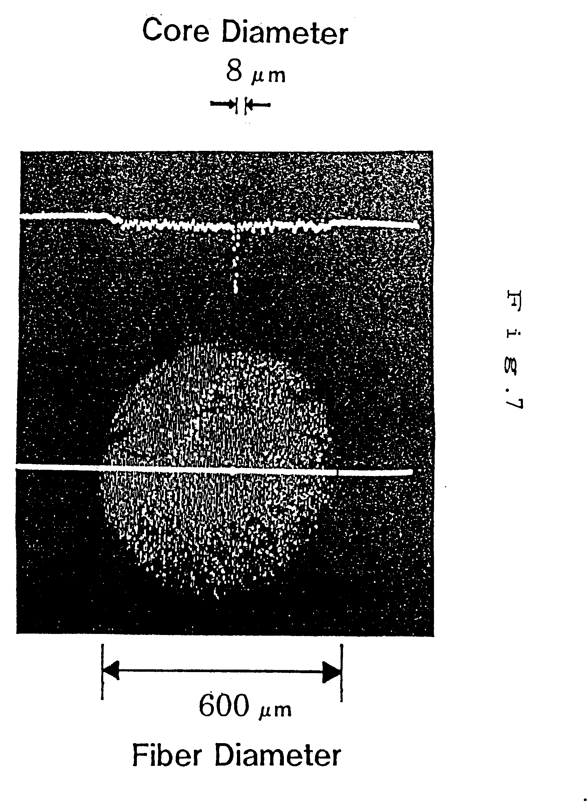

This was hot-elongated at 250°C under the condition of V1=1cm/min and V2=100 cm/min to obtain the polymer fiber having 1mm outer diameter and 0.06 mm (60 micron) core diameter. This fiber was again inserted into the cylindrical PMMA polymer vessel shown in Fig.3, in which the outer and inner diameters were 4.5 and 1 mm respectively. This was hot-elongated at 250°C under the condition of V1=1.77 cm/min and V2=100 cm/min to obtain the single mode polymer optical fiber having 0.6 mm outer diameter and 0.008 mm (8 microns) core diameter. The cutoff wavelength of this fiber was about 0.617 micron in formula III. Figure 7 shows the picture image of the end surface of the single mode fiber with 50 mm length and the intensity display of the sectional plane at the exit of fiber. It is shown by the intensity display that the diameter of the core is about 8 microns, satisfying the single mode condition. A sharp core intensity peak with about 8 micron width is observed. Here the wavelength of the light was 0.6328 microns. The single mode condition was also confirmed by the far-field pattern method.

Example 6

The fabrication method was the same as in example 5 besides the values of V1 at final hot-elongation hot-elongation and temperature. The manufactured base material in which the outer and core diameters were 4.5 mm and 0.06 mm respectively was hot-elongated at V1=6.0 cm/min and V2=100 cm/min at 200°C into the fiber having about 15 microns core diameter. The near field patter shows the intensity pattern of two modes fiber at 633 mn wavelength, in which the intensity peak from the core was different frow the Gaussian peak and the typical two mode pattern was observed.

Example 7

The optical fiber base material was manufactured by the process shown in Fig.1. First, the cylindrical vessel was prepared by the copolymerization of MMA and trifluoroethyl methacrylate (3FMA) according to the following condition:

Polymerization initiator; benzoyl peroxide

Chain transfer agent; n-butyl mercaptan=0.2wt.%

Polymerization temperature; 80°C for 20hr.

Vacuum heat treatment; 100°C, less than 0.2 mmHg for 20 hr.

The cylindrical vessel had 10 mm outer diameter and 0.10 mm inner diameter. The monomer feed composition MMA/3FMA to obtain this vessel was 32/1 (wt./wt.). The refractive index of this copolymer vessel was 1.49. The cylindrical copolymer vessel was filled with MMA monomer which contains initiator and chain transfer agent . This was polymerzed to obtain the base material (5).

The refractive index distribution of the base material was measured by and interferometric technique. The interface between the core and clad was not clearly recognized and the index gradient existed probably due to the mutual diffusion between the MMA monomer and the MMA-3FMA copolymer. This base material was hot-elorigated at 250°C under the condition of V1=0.36 cm/min and V2=100 cm/min to obtain the single mode polymer fiber having 0.6 mm outer diameter and 0.006 mm (6 micron) core diameter. The cutoff wavelength of this fiber was about 0.605 micron in formula III. The single mode condition was confirmed by the near-field and far-field pattern methods, the cutoff wavelength measurement, and the measurement of the polarization phase of light beam through the fiber.

Example 8

The optical fiber base material was manufactured by the process shown in Fig.1 and Fig.3. The vessel was prepared by the copolymerization of the MMA and 3FMA monomers. The manufacturing condition was as follows:

Polymerization initiator; benzoyl peroxide= 0.15 wt.%

Chain transfer agent; n-butyl mercaptan=0.2 wt.%

Polymerization temperature; 80°C for 20 hr.

Vacuum heat treatment; 100°C, less than 0.2 mmHg for 20 hr.

The vessel rod having 10 mm outer diameter includes three holes having a 0.20 mm diameter, whose axes are parallel to the axis of the vessel rod. The monomer feed composition MMA/3FMA to obtain this vessel was 32/1 (wt./wt.). The refractive index of this copolymer vessel was 1.49.

Three PMMA rods having 0.2 mm outer diameter was inserted into each hole of the vessel rod and the narrow gap between PMMA rod and inner wall of each hode was filled with MMA monomer containing initiator and chain transfer agent. This was polymerzed to obtain the base material (5). This was hot-elongated at 250°C under the condition of V1=0.09 cm/min and V2=100 cm/min to obtain the polymer fiber having 0.3 mm outer diameter and three cores having 6 microns diameter. The cutoff wavelength of each core was about 605 nm in formula III. The single mode condition for each core at 633 nm wavelength was confirmed by the near-field and far-field pattern methods

**Claims**

1. A plastics optical fibre comprising at least one core located within a clad, said core having a different refractive index from said clad, characterised in that the relationship between the refractive indices of the materials of said core and clad and the diameter of said core are such that the optical fibre exhibits single mode or other specific mode number characteristics.

2. An optical fibre as claimed in claim 1 wherein the core is a plastics material having graded refractive index.

3. A method for the manufacture of an optical fibre as claimed in claim 1 or claim 2 which comprises elongating a base material having a peripheral part and at least one central part, said parts each comprising plastics materials such that the material of the central part or parts is cylindrical and has a higher refractive index than that of the peripheral part.

4. A method as claimed in claim 3 wherein said base material is prepared by subjecting a mixture of at least one type of monomer and at least one low molecular weight compound having a refractive index higher than that of the polymer obtainable from said monomer to polymerisation-inducing heat or irradiation in a vessel having a cylindrical bore, whereby polymerisation occurs preferentially at the periphery of the bore thereby leading to enhancement of the concentration of the low molecular weight compound in the vicinity of the central axis of the bore.

5. A method as claimed in claim 3 wherein said base material is prepared by subjecting a mixture of at least two types of monomer or sols thereof which yield polymers having different refractive indices to polymerisation-inducing heat or irradiation in a vessel having a cylindrical bore, whereby polymer having lower refractive index is formed in the vicinity of the periphery of the bore and polymer having higher refractive index is formed in the vicinity of the central axis of the bore.

6. A method as claimed in claim 3 wherein said base material is prepared by inserting a graded index or stepped index optical fibre, an optical fibre previously prepared in accordance with the method of claim 3 or a polymer rod or fibre into a substantially cylindrical bore in a vessel.

7. A method as claimed in claim 6 wherein at least one monomer is injected to fill any residual space in the bore and is polymerised prior to the elongation process.

8. A method as claimed in claim 3 wherein said base material is prepared by subjecting at least one type of monomer or sol thereof to polymerisation-inducing heat or irradiation in a vessel having a cylindrical bore, said monomer being such as to yield a polymer having a higher refractive index than that of the vessel.

9. A method as claimed in claim 3 wherein said base material is prepared by subjecting a mixture of at least one type of monomer and at least one high molecular weight polymer or oligomer having a refractive index higher than that of the polymer obtainable from said monomer to polymerisation-inducing heat or irradiation in a vessel having a cylindrical bore, whereby polymerisation occurs preferentially at the periphery of the bore thereby leading to enhancement of the concentration of the high molecular weight polymer or oligomer in the vicinity of the central axis of the bore.

10. A method as claimed in any of claims 4, 5 and 7 to 9 wherein a polymerisation initiator and a chain transfer agent are mixed with the monomer or monomers to be polymerised.

11. A method as claimed in any of claims 4 to 10 wherein the vessel is elongated to form the clad.

12. A method as claimed in any of claims 4 to 11 wherein the vessel is a polymerising tube.

13. Use of optical fibres as claimed in claim 1 or claim 2 in the manufacture of multicore optical fibres, rods, sheets and bundles.

Fig. 1

# Fig. 2

Fig.3

10

Fig.4

## F i g . 5

F i g .6

Core Diameter
8 μm

600 μm

Fiber Diameter

F i g . 7